# EUROPEAN PATENT APPLICATION

(11) **EP 4 239 954 A1**
(43) Date of publication of application: **06.09.2023**
(21) Application number: 21896873.3
(22) Date of filing: 18.11.2021
(51) Int. Cl.: H04L 12/02

(54) **MESSAGE TRANSMISSION METHOD AND APPARATUS, DEVICE, AND COMPUTER-READABLE STORAGE MEDIUM**

(30) Priority: 25.11.2020 CN 202011346542
(71) Applicant: Huawei Technologies Co., Ltd., Shenzhen, Guangdong 518129 (CN)
(72) Inventor: XU, Guoqi, Shenzhen, Guangdong 518129 (CN); HU, Zhibo, Shenzhen, Guangdong 518129 (CN); MA, Linlin, Shenzhen, Guangdong 518129 (CN)
(74) Representative: Isarpatent
(86) International application number: PCT/CN2021/131400
(87) International publication number: WO 2022/111372

(57) **Abstract**

This application belongs to the field of communication technologies, and discloses a packet transmission method and apparatus, a device, and a computer-readable storage medium. An example is used in which the method is applied to a first communication device serving as an intermediate node in a transmission process. The method includes: The first communication device first obtains a first packet; selects, based on a network quality condition corresponding to the first packet, a first physical interface from at least two physical interfaces corresponding to a logical interface to send the first packet. A network quality parameter of the first physical interface corresponds to the network quality condition. In this application, the network quality parameter of the first physical interface for sending the first packet corresponds to the network quality condition. Therefore, cases such as a large delay and a high packet loss rate are reduced in a process of transmitting the first packet.

## Description

This application claims priority to Chinese Patent Application No. 202011346542.6, filed on November 25, 2020 and entitled "PACKET TRANSMISSION METHOD AND APPARATUS, DEVICE, AND COMPUTER-READABLE STORAGE MEDIUM", which is incorporated herein by reference in its entirety.

### TECHNICAL FIELD

This application relates to the field of communication technologies, and in particular, to a packet transmission method and apparatus, a device, and a computer-readable storage medium.

### BACKGROUND

In a packet transmission process, different packets may have different transmission requirements. The transmission requirements include, but are not limited to, requirements for a bandwidth, a delay, a packet loss rate, jitter, security, and the like. How to transmit a packet on a premise of meeting a transmission requirement becomes an urgent problem to be resolved.

In a related technology, a logical interface for transmitting a packet is provided, and the logical interface includes a plurality of physical interfaces bound by using a link aggregation technology. In a packet transmission process, a physical interface is selected from the logical interface, to transmit the packet through the selected physical interface.

However, if the packet is transmitted by using a method provided in the related technology, a transmission capability of the selected physical interface may not meet a transmission requirement of the packet. As a result, cases such as a large delay and a high packet loss rate occur in the packet transmission process.

### SUMMARY

This application provides a packet transmission method and apparatus, a device, and a computer-readable storage medium, to resolve problems provided in the related technology. Technical solutions are as follows.

According to a first aspect, a packet transmission method is provided. An example in which the method is applied to a first communication device serving as an intermediate node in a transmission process is used. The method includes: The first communication device first obtains a first packet. The first communication device then selects, based on a network quality condition corresponding to the first packet, a first physical interface from at least two physical interfaces corresponding to a logical interface to send the first packet. A network quality parameter of the first physical interface corresponds to the network quality condition.

In this application, the network quality parameter of the first physical interface for sending the first packet corresponds to the network quality condition. Therefore, cases such as a large delay and a high packet loss rate are reduced in a process of transmitting the first packet.

In a possible implementation, the network quality condition includes a network slice identifier, an application program identifier, or a service level agreement SLA identifier.

In a possible implementation, the first packet includes the network quality condition, a network quality identifier is set for the first physical interface, and the network quality identifier corresponds to the network quality parameter.

Based on matching between a network quality condition of a packet and a network quality identifier set for an interface, a communication device can quickly determine to use a first physical interface to transmit the packet, so that packet transmission efficiency can be improved. The network quality identifier may be a network quality parameter of the physical interface, or may be information such as a virtual network identifier corresponding to the network quality parameter.

In a possible implementation, before the first communication device selects, based on a network quality condition corresponding to the first packet, a first physical interface from at least two physical interfaces corresponding to a logical interface to send the first packet, the method further includes: The first communication device determines, based on characteristic information corresponding to the first packet, the network quality condition corresponding to the first packet.

By determining a network quality condition corresponding to a packet in this manner, the network quality condition does not need to be carried in the packet, so that a length of the packet can be reduced and modification of the packet can be reduced.

In a possible implementation, before the first communication device obtains a first packet, the method further includes: The first communication device obtains network quality parameters of physical interfaces corresponding to the logical interface; and the first communication device selects, from the network quality parameters of the physical interfaces, a network quality parameter meeting a target condition as a network quality parameter of the logical interface, and advertises the network quality parameter of the logical interface.

In a possible implementation, the network quality parameter includes a transmission delay, and that the first communication device selects, from the network quality parameters of the physical interfaces, a network quality parameter meeting a target condition as a network quality parameter of the logical interface includes: The first communication device selects a smallest transmission delay from transmission delays of the physical interfaces as a transmission delay of the logical interface, where the smallest transmission delay is a transmission delay of the first physical interface or a transmission delay of a second physical interface included in the logical interface.

In a possible implementation, the network quality parameter includes a bandwidth, and that the first communication device selects, from the network quality parameters of the physical interfaces, a network quality parameter meeting a target condition as a network quality parameter of the logical interface includes: The first communication device selects a largest bandwidth from bandwidths of the physical interfaces as a bandwidth of the logical interface, where the largest bandwidth is a bandwidth of the first physical interface or a bandwidth of a second physical interface included in the logical interface.

By selecting a network quality parameter of a physical port meeting a target condition in a logical port as a network quality parameter of the logical interface and advertising the network quality parameter of the logical interface, another communication device in a network can learn of the network quality parameter that can be provided by the physical port.

In a possible implementation, the advertising the network quality parameter of the logical interface includes: The first communication device advertises the network quality parameter of the logical interface according to an intermediate system to intermediate system IS-IS protocol, where the network quality parameter of the logical interface is carried in an extended intermediate system reachability type-length-value TLV field with a type value of 22, or carried in an inter autonomous system reachability TLV field, or carried in a multi topology initial sequence number TLV field with a type value of 222.

In a possible implementation, the advertising the network quality parameter of the logical interface includes: The first communication device advertises the network quality parameter of the logical interface according to an open shortest path first OSPF protocol, where the network quality parameter of the logical interface is carried in an extended TLV subfield.

By advertising a network quality parameter via an IS-IS or OSPF packet, another device in a network can obtain a related network quality parameter of a logical interface via the IS-IS or OSPF packet.

In a possible implementation, the method further includes: The first communication device obtains a second packet, where the second packet does not include the network quality condition; and the first communication device selects a third physical interface from the at least two physical interfaces corresponding to the logical interface to send the second packet, where a network quality parameter of the third physical interface does not correspond to the network quality condition.

When a packet transmitted in a network does not carry a network quality condition, a communication device may alternatively randomly select, from a logical interface, an interface from physical interfaces that do not correspond to the foregoing network quality condition to send the packet. In this way, it can be further ensured that a packet requiring high quality assurance can be transmitted through a corresponding physical interface, and another packet is transmitted through another physical interface, thereby further ensuring network quality.

In a possible implementation, before the first communication device selects, based on a network quality condition corresponding to the first packet, a first physical interface from at least two physical interfaces corresponding to a logical interface to send the first packet, the method further includes: The first communication device determines the logical interface based on a destination address of the first packet.

After first determining that an interface for sending a packet is a logical interface, a communication device may select a corresponding physical interface from the logical interface to send the packet.

In a possible implementation, the logical interface includes a trunk Trunk interface.

This technical solution is applied to a trunk interface, so that a physical interface that best matches a network quality condition of the packet may be selected to transmit the packet in the case that a packet is transmitted through the trunk interface.

According to a second aspect, a packet transmission method is provided. The method is applied to a communication device serving as a head node in a transmission process. The method includes:
A first communication device obtains a network quality parameter of a logical interface of a second communication device.

The first communication device obtains a first packet, and determines a network quality condition based on matching between the network quality parameter and a network quality requirement of the first packet.

The first communication device updates the first packet to obtain a second packet, where the second packet includes the network quality condition.

The first communication device sends the second packet to the second communication device.

In a possible implementation, that a first communication device obtains a network quality parameter of a logical interface of a second communication device includes: The first communication device obtains the configured network quality parameter of the logical interface; or the first communication device receives the network quality parameter of the logical interface sent by the second communication device.

In a possible implementation, the network quality condition includes a network slice identifier, an application program identifier, or a service level agreement SLA identifier.

According to a third aspect, a packet transmission apparatus is provided. The apparatus includes:
an obtaining module, configured to obtain, a first packet; and
a sending module, configured to select, based on a network quality condition corresponding to the first packet, a first physical interface from at least two physical interfaces corresponding to a logical interface to send the first packet, where a network quality parameter of the first physical interface corresponds to the network quality condition.

In a possible implementation, the network quality condition includes a network slice identifier, an application program identifier, or a service level agreement SLA identifier.

In a possible implementation, the first packet includes the network quality condition, a network quality identifier is set for the first physical interface, and the network quality identifier corresponds to the network quality parameter.

In a possible implementation, the apparatus further includes: a first determining module, configured to determine, based on characteristic information corresponding to the first packet, the network quality condition corresponding to the first packet.

In a possible implementation, the obtaining module is further configured to obtain, network quality parameters of physical interfaces corresponding to the logical interface; and the apparatus further includes: a selection module, configured to select, from the network quality parameters of the physical interfaces, a network quality parameter meeting a target condition as a network quality parameter of the logical interface; and the sending module, further configured to advertise the network quality parameter of the logical interface.

In a possible implementation, the network quality parameter includes a transmission delay, and the selection module is configured to select, a smallest transmission delay from transmission delays of the physical interfaces as a transmission delay of the logical interface, where the smallest transmission delay is a transmission delay of the first physical interface or a transmission delay of a second physical interface included in the logical interface.

In a possible implementation, the network quality parameter includes a bandwidth, and the selection module is configured to select, a largest bandwidth from bandwidths of the physical interfaces as a bandwidth of the logical interface, where the largest bandwidth is a bandwidth of the first physical interface or a bandwidth of a second physical interface included in the logical interface.

In a possible implementation, the sending module is configured to select, a largest bandwidth from bandwidths of the physical interfaces as a bandwidth of the logical interface, where the largest bandwidth is a bandwidth of the first physical interface or a bandwidth of a second physical interface included in the logical interface.

In a possible implementation, the sending module is configured to advertise, the network quality parameter of the logical interface according to an open shortest path first OSPF protocol, where the network quality parameter of the logical interface is carried in an extended TLV subfield.

In a possible implementation, the obtaining module is further configured to obtain, a second packet, where the second packet does not include the network quality condition; and the sending module is configured to select, a third physical interface from the at least two physical interfaces corresponding to the logical interface to send the second packet, where a network quality parameter of the third physical interface does not correspond to the network quality condition.

In a possible implementation, the apparatus further includes: a second determining module, configured to determine, the logical interface based on a destination address of the first packet.

In a possible implementation, the logical interface includes a trunk Trunk interface.

According to a fourth aspect, a packet transmission apparatus is provided. The apparatus includes:
an obtaining module, configured to obtain, a network quality parameter of a logical interface of a second communication device; and obtain, a first packet, and determine a network quality condition based on matching between the network quality parameter and a network quality requirement of the first packet;
an updating module, configured to update, the first packet to obtain a second packet, where the second packet includes the network quality condition; and
a sending module, configured to send, the second packet to the second communication device.

In a possible implementation, the obtaining module is configured to obtain, the configured network quality parameter of the logical interface; or receive, the network quality parameter of the logical interface sent by the second communication device.

In a possible implementation, the network quality condition includes a network slice identifier, an application program identifier, or a service level agreement SLA identifier.

According to a fifth aspect, a communication device is provided. The device includes: a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the method according to any one of the first aspect or the possible implementations of the first aspect.

According to a sixth aspect, a communication device is provided. The device includes: a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform the method according to any one of the second aspect or the possible implementations of the second aspect.

Optionally, there are one or more processors, and there are one or more memories.

Optionally, the memory and the processor may be integrated together, or the memory and the processor may be separately disposed.

In a specific implementation process, the memory may be a non-transitory (non-transitory) memory, such as a read-only memory (read-only memory, ROM). The memory and the processor may be integrated into one chip, or may be respectively disposed on different chips. A type of the memory and a manner of disposing the memory and the processor are not limited in this embodiment of this application.

According to a seventh aspect, a communication device is provided. The communication device includes a processor and a communication interface, and the processor executes instructions, to enable the communication device to perform the packet transmission method according to any one of the first aspect or the possible implementations of the first aspect, or implement the packet transmission method according to any one of the second aspect or the possible implementations of the second aspect.

According to an eighth aspect, a communication system is provided. The system includes a first communication device and a second communication device. The first communication device is configured to perform the packet transmission method according to any one of the first aspect or the possible implementations of the first aspect, and the second communication device is configured to perform the packet transmission method according to any one of the second aspect or the possible implementations of the second aspect.

According to a ninth aspect, a computer program (product) is provided. The computer program (product) includes computer program code. When the computer program code is run by a computer, the computer is enabled to perform the methods in the foregoing aspects.

According to a tenth aspect, a computer-readable storage medium is provided. The computer-readable storage medium stores programs or instructions. When the programs or the instructions are run on a computer, the methods in the foregoing aspects are performed.

According to an eleventh aspect, a chip is provided, including a processor, configured to invoke, from a memory, and run instructions stored in the memory, so that a communication device in which the chip is installed performs the methods in the foregoing aspects.

According to a twelfth aspect, another chip is provided, including an input interface, an output interface, a processor, and a memory. The input interface, the output interface, the processor, and the memory are connected through an internal connection channel. The processor is configured to execute code in the memory, and when the code is executed, the processor is configured to perform the methods in the foregoing aspects.

### BRIEF DESCRIPTION OF DRAWINGS

FIG. 1 is a schematic diagram of an implementation environment according to an embodiment of this application;
FIG. 2 is a schematic flowchart of a packet transmission method according to an embodiment of this application;
FIG. 3 is a schematic diagram of a structure of a logical interface according to an embodiment of this application;
FIG. 4 is a schematic flowchart of a packet transmission method according to an embodiment of this application;
FIG. 5 is a schematic diagram of a structure of a packet transmission apparatus according to an embodiment of this application;
FIG. 6 is a schematic diagram of a structure of a packet transmission apparatus according to an embodiment of this application;
FIG. 7 is a schematic diagram of a structure of a communication device according to an embodiment of this application;
FIG. 8 is a schematic diagram of a structure of a communication device according to an embodiment of this application; and
FIG. 9 is a schematic diagram of a structure of a communication system according to an embodiment of this application.

### DESCRIPTION OF EMBODIMENTS

Terms used in embodiments of this application are only used to explain specific embodiments of this application, but are not intended to limit this application.

In a packet transmission process, a communication device needs to send a packet through an appropriate physical interface. In a related technology, a logical interface for transmitting a packet is provided, and the logical interface includes a plurality of physical interfaces. After receiving the packet, a hash value of the packet is first calculated based on related information of the packet. Then, a physical interface for transmitting the packet is determined based on the hash value of the packet and a correspondence between the foregoing hash value and the physical interface. The related information of the packet includes at least one of the following: a source Internet protocol (internet protocol, IP) address, a destination IP address, a source port, and a destination port.

However, different packets usually have different network quality conditions, and different physical interfaces in a logical interface also have different transmission capabilities. A transmission capability of the physical interface selected by using a method in the foregoing description may not meet a network quality condition of the packet. In other words, if the packet is sent through the selected physical interface, cases such as a large transmission delay, a high packet loss rate, and the like of the packet occur.

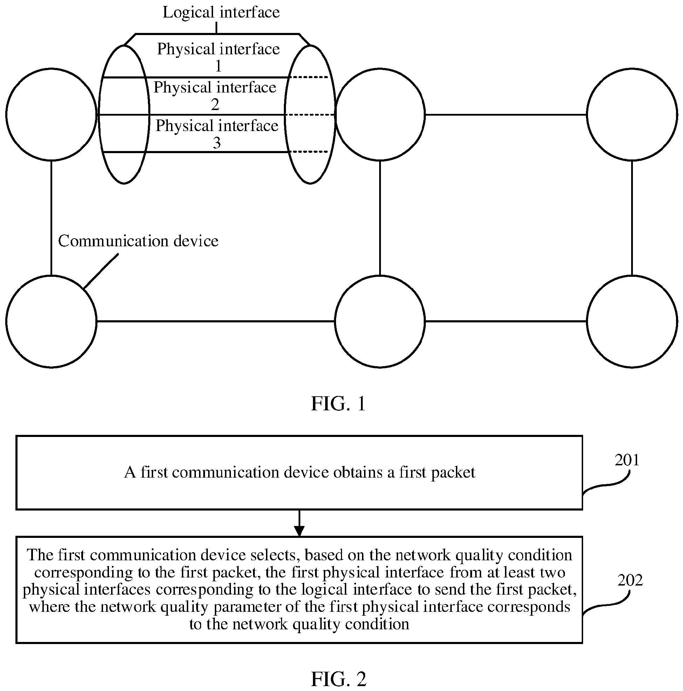

An embodiment of this application provides a packet transmission method. The method can be applied to an implementation environment shown in FIG. 1. FIG. 1 includes a plurality of communication devices, and a network topology structure is formed among the plurality of communication devices based on an actual requirement. For example, each communication device includes, but is not limited to, a router and a switch, and is also not limited to a physical device or a virtual device.

For any communication device, based on that the any communication device is a head node in a packet transmission process, after receiving a packet, the any communication device is configured to select, from adjacent communication devices, a communication device configured to receive the packet, and send the packet to the selected communication device. Alternatively, based on that the any communication device is an intermediate node in the packet transmission process, the any communication device is configured to receive a packet sent by a previous-hop communication device, and then forward the received packet to another adjacent communication device. There is a logical interface between the any communication device and the another adjacent communication device. The logical interface includes a plurality of physical interfaces, and the any communication device is configured to select an appropriate physical interface to forward the received packet. Alternatively, based on that the any communication device is a tail node in the packet transmission process, the any communication device receives a packet sent by a previous-hop communication device.

Based on the implementation environment shown in FIG. 1, an embodiment of this application provides a packet transmission method. As shown in FIG. 2, the method includes the following process.

**201: A first communication device obtains a first packet.**

The first communication device is an intermediate node or a head node in a process of transmitting the first packet, and the first packet is a packet sent by a communication device or user equipment located at a previous hop of the first communication device to the first communication device. For example, the previous-hop communication device queries a locally configured routing table based on a destination IP address of the first packet, to select, from communication devices adjacent to the previous-hop communication device, to send the first packet to the first communication device.

In an example embodiment, before the first communication device obtains the first packet, the method further includes: The first communication device obtains network quality parameters of physical interfaces corresponding to a logical interface; and the first communication device selects, from the network quality parameters of the physical interfaces, a network quality parameter meeting a target condition as a network quality parameter of the logical interface, and advertises the network quality parameter of the logical interface.

The logical interface of the first communication device includes a first physical interface and a second physical interface. A quantity of physical interfaces included in the first physical interface and a quantity of physical interfaces included in the second physical interface are not limited in this embodiment. The first physical interface is a physical interface selected by the first communication device for sending the first packet, and the second physical interface is another physical interface other than the first physical interface in the physical interfaces corresponding to the logical interface. A network quality parameter of the first physical interface corresponds to a network quality condition of the first packet. For a process in which the first communication device sends the first packet through the first physical interface, refer to description in 202 below. In an example embodiment, the logical interface of the first communication device includes a trunk (Trunk) interface. The Trunk interface includes a plurality of physical interfaces bound by using a link aggregation technology. The physical interfaces bound together are referred to as member interfaces. Certainly, the logical interface may alternatively be another interface other than the Trunk interface, for example, a virtual local area network interface (virtual local area network interface, VLANIF), a virtual bridge domain interface (virtual bridge domain interface, VBDIF), or an IP-trunk interface. This is not limited in this embodiment.

In this embodiment, if the network quality parameters of the physical interfaces are different, target conditions that the network quality parameters of the physical interfaces need to meet when the network quality parameter of the logical interface is determined are also different. In an example embodiment, the network quality parameters of the physical interfaces and the corresponding target conditions include, but are not limited to, the following several cases.

**Case A1:** The network quality parameter includes a transmission delay. Correspondingly, that the first communication device selects, from the network quality parameters of the physical interfaces, a network quality parameter meeting a target condition as a network quality parameter of the logical interface includes: The first communication device selects a smallest transmission delay from transmission delays of the physical interfaces as a transmission delay of the logical interface.

By using an example in which the logical interface includes three physical interfaces, a transmission delay of a physical interface 1 is 3 ms (unit: millisecond), a transmission delay of a physical interface 2 is 5 ms, and a transmission delay of a physical interface 3 is 8 ms. In this case, a smallest transmission delay in the transmission delays of the three physical interfaces is the transmission delay 3 ms of the physical interface 1. Therefore, 3 ms is selected as the transmission delay of the logical interface.

It should be understood that a transmission delay of the first physical interface needs to correspond to the network quality condition of the first packet. Therefore, when the network quality condition of the first packet needs to correspond to the smallest transmission delay, the smallest transmission delay is the transmission delay of the first physical interface. Alternatively, when the network quality condition of the first packet does not need to correspond to the smallest transmission delay, the smallest transmission delay is a transmission delay of the second physical interface other than the first physical interface in the logical interface.

**Case A2:** The network quality parameter includes a bandwidth. Correspondingly, that the first communication device selects, from the network quality parameters of the physical interfaces, a network quality parameter meeting a target condition as a network quality parameter of the logical interface includes: The first communication device selects a largest bandwidth from bandwidths of the physical interfaces as a bandwidth of the logical interface. For example, bandwidths of three physical interfaces included in the logical interface are 2 Mbps (unit: megabits per second), 4 Mbps, and 6 Mbps respectively. A largest bandwidth is 6 Mbps. Therefore, 6 Mbps is selected as the bandwidth of the logical interface. The largest bandwidth is a bandwidth of the first physical interface or a bandwidth of the second physical interface included in the logical interface.

**Case A3:** The network quality parameter includes a security parameter, and a security parameter of any physical interface indicates security and reliability of the any physical interface. Higher security and reliability of the any physical interface indicates a lower probability that a packet transmitted through the any physical interface is maliciously attacked. Correspondingly, that the first communication device selects, from the network quality parameters of the physical interfaces, a network quality parameter meeting a target condition as a network quality parameter of the logical interface includes: The first communication device selects, from security parameters of the physical interfaces, a security parameter indicating highest security and reliability as a security parameter of the logical interface. For example, when a larger security parameter indicates higher security and reliability indicated by the security parameter, the first communication device selects a largest security parameter from the security parameters of the physical interfaces as the security parameter of the logical interface. The security parameter indicating the highest security and reliability is a security parameter of the first physical interface or a security parameter of the second physical interface included in the logical interface.

After obtaining the network quality parameter of the logical interface, the first communication device further advertises the network quality parameter of the logical interface. For example, the first communication device advertises the network quality parameter of the logical interface through any one of a plurality of protocols included in an interior gateway protocol (interior gateway protocol, IGP). The following describes, by using an example, two different cases in which the first communication device performs advertising.

**Case B1:** The first communication device advertises the network quality parameter of the logical interface according to an intermediate system to intermediate system (intermediate system to intermediate system, IS-IS) protocol included in the IGP.

For example, the network quality parameter of the logical interface can be carried in a plurality of different types of type length value (type length value, TLV) fields. For example, the network quality parameter of the logical interface is carried in an extended (extended) intermediate system (intermediate system, IS) reachability (reachability) TLV field, defined in request for comments (request for comments, RFC) 5305, with a type value of 22. The extended IS reachability TLV field is a field in IS-IS traffic engineering (traffic engineering, TE) metric extensions (metric extensions) of RFC 8570. For another example, the network quality parameter of the logical interface is carried in an inter autonomous system (inter autonomous system, inter-AS) reachability TLV field. For another example, the network quality parameter of the logical interface is carried in a multi topology initial sequence number (multi topology initial sequence number, MT-ISN) TLV field, defined in RFC 5120, with a type value of 222.

**Case B2:** The first communication device advertises the network quality parameter of the logical interface through an open shortest path first (open shortest path first, OSPF) protocol included in the IGP. The network quality parameter of the logical interface is carried in a TLV subfield corresponding to a link (link) TLV field defined in RFC 7471. The TLV subfield corresponding to the link TLV field includes, but is not limited to: a unidirectional link delay (unidirectional link delay) TLV subfield with a type value of 27, a unidirectional available bandwidth (unidirectional available bandwidth) TLV subfield with a type value of 32, or the like. This is not enumerated herein one by one.

For example, the network quality parameter of the logical interface is the network quality parameter meeting the target condition in the network quality parameters of the physical interfaces. Therefore, when the network quality parameter meeting the target condition in the network quality parameters of the physical interfaces is updated, the network quality parameter of the logical interface also needs to be correspondingly updated, to obtain an updated network quality parameter of the logical interface. Then, the first communication device re-advertises the updated network quality parameter of the logical interface.

By using an example in which the network quality parameter includes the transmission delay and the logical interface includes the three physical interfaces, a process of updating the network quality parameter of the logical interface is described. When all the transmission delays of the three physical interfaces are not updated, the transmission delays of the physical interface 1, the physical interface 2, and the physical interface 3 are 3 ms, 5 ms, and 8 ms respectively. The transmission delay of the logical interface is the smallest transmission delay in the transmission delays of the physical interfaces. Therefore, the first communication device advertises the transmission delay of the logical interface as 3 ms. Based on that the transmission delay of the physical interface 1 is updated from 3 ms to 6 ms, the smallest transmission delay in the transmission delays of the three physical interfaces is updated from 3 ms of the physical interface 1 to 5 ms of the physical interface 2. Therefore, the first communication device re-advertises the updated transmission delay of the logical interface as 5 ms.

**202: The first communication device selects, based on the network quality condition corresponding to the first packet, the first physical interface from at least two physical interfaces corresponding to the logical interface to send the first packet, where the network quality parameter of the first physical interface corresponds to the network quality condition.**

For example, the network quality condition includes, but is not limited to, a network slice (slice) identifier (identifier, ID), an application program identifier, and a service level agreement (service level agreement, SLA) identifier. The network quality condition corresponding to the first packet indicates a network quality requirement of the first packet, for example, a requirement of the first packet for a transmission delay, a bandwidth, or security and reliability. In this embodiment, the network quality parameter of the selected first physical interface corresponds to the network quality condition, that is, the network quality parameter of the first physical interface can meet the network quality requirement of the first packet in a transmission process.

It should be understood that, that the network quality parameter of the first physical interface meets the network quality requirement of the first packet means that the network quality parameter of the first physical interface is better than the network quality requirement of the first packet; or the network quality parameter of the first physical interface is not better than the network quality requirement of the first packet, but a difference between the network quality parameter of the first physical interface and the network quality requirement of the first packet is within an allowed range, where the allowed range is determined according to experience or an actual requirement; or the network quality parameter of the first physical interface is not better than the network quality requirement of the first packet, but the first physical interface is an interface, in the logical interface, whose corresponding network quality parameter is closest to the foregoing network quality requirement.

For example, when network quality parameters of a plurality of physical interfaces in the at least two physical interfaces corresponding to the logical interface are all better than the network quality requirement of the first packet, a physical interface that has a smallest difference from the network quality requirement of the first packet is selected from the plurality of physical interfaces as the first physical interface; or a physical interface that has an optimal network quality parameter is selected from the plurality of physical interfaces as the first physical interface. When the network quality parameter includes the transmission delay, a smaller transmission delay indicates a better network quality parameter, and the optimal network quality parameter indicates a smallest transmission delay. When the network quality parameter includes the bandwidth, a larger bandwidth indicates a better network quality parameter, and the optimal network quality parameter indicates a largest bandwidth. When the network quality parameter includes the security parameter, higher security and reliability indicated by a security parameter indicates a better network quality parameter, and the optimal network quality parameter indicates highest indicated security and reliability.

It is to be noted that the foregoing network quality condition is a condition directly included in the first packet, or a condition that is not included in the first packet and that is determined by the first communication device. The two cases are respectively described below.

**Case C1:** The first packet includes the network quality condition.

For example, a correspondence between the network quality condition and the network quality requirement is configured in the first communication device. The first communication device determines the network quality requirement of the first packet based on the network quality condition included in the first packet and the correspondence between network quality and the network quality requirement. In the physical interfaces corresponding to the logical interface, based on that a network quality parameter of any physical interface meets the network quality requirement indicated by the network quality condition, the first communication device can use the any physical interface as the first physical interface, to send the first packet through the first physical interface.

In an example embodiment, a network quality identifier is set for the selected first physical interface, and the network quality identifier corresponds to the network quality parameter. That is, the network quality identifier indicates that the network quality parameter of the first physical interface corresponds to the network quality condition. For example, the network quality identifier set for the first physical interface is a slice ID, and the slice ID is for identifying a network slice corresponding to the first physical interface. For the first communication device, a network slicing technology means that the first communication device obtains at least one network slice by dividing the at least two physical interfaces corresponding to the logical interface, any network slice includes at least one physical interface, and the any network slice can meet a specific network quality requirement. Based on this, the first communication device divides the first physical interface into one network slice, and a slice ID of the network slice is configured for the first physical interface. A network quality requirement that can be met by the network slice is the network quality requirement indicated by the network quality condition of the first packet. Therefore, the slice ID of the network slice corresponds to the network quality condition of the first packet. Correspondingly, when subsequently receiving another packet that has the same network quality condition as the first packet, the first communication device may determine, based on the slice ID set for the first physical interface, that the network quality parameter of the first physical interface corresponds to the network quality condition, to directly select the first physical interface from the at least two physical interfaces corresponding to the logical interface to send the another packet.

In addition to the slice ID, for example, the network quality identifier set for the first physical interface can also be the network quality parameter of the first physical interface, and the first communication device stores a correspondence between the network quality parameter and the slice ID. Correspondingly, when receiving another packet that has the same network quality condition as the first packet, the first communication device first determines the slice ID corresponding to the network quality condition, and then selects the first physical interface based on the slice ID and the correspondence between the network quality parameter and the slice ID, to send the another packet through the first physical interface.

**Case C2:** The first packet does not include the network quality condition, and before the first communication device selects, based on the network quality condition corresponding to the first packet, the first physical interface from at least two physical interfaces corresponding to the logical interface to send the first packet, the first communication device first determines, based on characteristic information corresponding to the first packet, the network quality condition corresponding to the first packet.

For example, a correspondence between the characteristic information and the network quality condition is configured in the first communication device. After obtaining the first packet, the first communication device parses the first packet to obtain the characteristic information corresponding to the first packet. The first communication device then determines, based on the characteristic information corresponding to the first packet and the correspondence between the characteristic information and the network quality condition, the network quality condition corresponding to the first packet. For example, the characteristic information corresponding to the first packet includes, but is not limited to, a quintuple of the first packet. The quintuple includes a source IP address, a destination IP address, a source port, a destination port, and a transmission layer protocol of the first packet.

After determining the network quality condition corresponding to the first packet, the first communication device selects, according to the description in the foregoing Case C1, the first physical interface to send the first packet based on the determined network quality condition. Details are not described herein again.

In an example embodiment, before the first communication device selects, based on the network quality condition corresponding to the first packet, the first physical interface from at least two physical interfaces corresponding to the logical interface to send the first packet, the method further includes: The first communication device determines the logical interface based on a destination address of the first packet. The first communication device queries, based on the destination address of the first packet, a routing table configured in the first communication device, to determine a next-hop communication device. In this case, a logical interface between the first communication device and the next-hop communication device is the determined logical interface.

For example, in addition to the foregoing Case C1 and Case C2, in this embodiment, packet transmission can also be performed according to the following Case C3. For ease of differentiation, a to-be-transmitted packet in Case C3 is a second packet. For details, refer to the following description.

**Case C3:** The first communication device obtains a second packet, where the second packet does not include the network quality condition. The first communication device selects a third physical interface from the at least two physical interfaces corresponding to the logical interface to send the second packet, where a network quality parameter of the third physical interface does not correspond to the network quality condition.

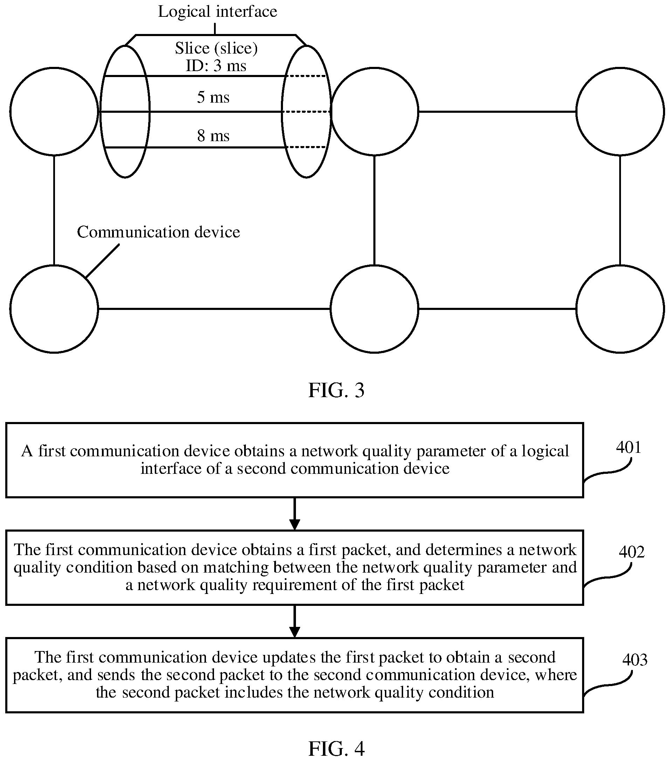

For example, before the first communication device obtains the second packet, a slice ID is set for a physical interface whose network quality parameter meets the target condition in the physical interfaces corresponding to the logical interface. It can be learned from the description of the network quality parameter in the foregoing 201 that, the physical interface for which the slice ID is set in the physical interfaces is a physical interface that has the smallest transmission delay, a physical interface that has the largest bandwidth, or a physical interface that has the security parameter indicating the highest security and reliability. For example, FIG. 3 shows a case in which a slice ID is set for a physical interface that has a smallest transmission delay in three physical interfaces of a logical interface.

Correspondingly, after the first communication device obtains the second packet, because the second packet does not include the network quality condition, the first communication device selects the third physical interface to send the second packet. The third physical interface is another physical interface other than the physical interface for which the slice ID is set in the at least two physical interfaces corresponding to the logical interface. For example, based on that the third physical interface includes a plurality of physical interfaces, the first communication device determines, by using a hash algorithm, one physical interface from the plurality of physical interfaces included in the third physical interface to send the second packet. It should be understood that the network quality parameter of the physical interface for sending the second packet may not correspond to the network quality condition. In addition, for a process of selecting the physical interface by using the hash algorithm, refer to the description in the related technology. Details are not described herein again.

Certainly, in Case C3, based on that the first communication device obtains a third packet that has the network quality condition, the first communication device directly sends the third packet through the physical interface for which the slice ID is set. A network quality parameter of the physical interface for which the slice ID is set can correspond to the network quality condition of the third packet.

In addition, it can be learned from the description in 201 that, the network quality parameter meeting the target condition in the network quality parameters of the physical interfaces may be updated. Therefore, based on that a physical interface that has the network quality parameter meeting the target condition is updated from one interface to another interface, the physical interface for which the slice ID is set also changes accordingly.

In conclusion, in this embodiment of this application, in a process of transmitting a first packet, an appropriate first physical interface is selected from a plurality of physical interfaces included in a logical interface based on a network quality condition corresponding to the first packet, so that a network quality parameter of the first physical interface can correspond to the network quality condition corresponding to the first packet. Therefore, cases such as a large delay and a high packet loss rate are reduced in the process of transmitting the first packet.

An embodiment of this application further provides a packet transmission method. Refer to FIG. 4. The method includes the following process.

**401: A first communication device obtains a network quality parameter of a logical interface of a second communication device.**

The first communication device selects, based on a destination address of a to-be-transmitted first packet, a communication device configured to receive the first packet from communication devices adjacent to the first communication device. The communication device selected by the first communication device is the second communication device. The first communication device then obtains the network quality parameter of the logical interface of the second communication device. For related description of the network quality parameter of the logical interface, refer to the foregoing 201 to 202. Details are not described herein again.

In an example embodiment, that a first communication device obtains a network quality parameter of a logical interface of a second communication device includes: The first communication device obtains the configured network quality parameter of the logical interface; or the first communication device receives the network quality parameter of the logical interface sent by the second communication device.

**402: The first communication device obtains the first packet, and determines a network quality condition based on matching between the network quality parameter and a network quality requirement of the first packet.**

After obtaining the first packet, the first communication device can determine the network quality requirement of the first packet; and then correspondingly determine, based on the matching between the network quality parameter of the logical interface of the second communication device and the network quality requirement of the first packet, the network quality condition corresponding to the first packet, where the network quality condition indicates the network quality requirement of the first packet.

In an example embodiment, the network quality condition includes a network slice identifier, an application program identifier, or a service level agreement SLA identifier. For description of the network quality condition, refer to the foregoing 202. Details are not described herein again.

**403: The first communication device updates the first packet to obtain a second packet, and sends the second packet to the second communication device, where the second packet includes the network quality condition.**

The first communication device encapsulates the first packet and the network quality requirement of the first packet, to obtain the second packet, where the second packet includes the network quality condition. After obtaining the second packet, the first communication device sends the second packet to the second communication device. Correspondingly, after the second communication device receives the second packet, the second communication device and an each-hop communication device after the second communication device all forward the second packet according to the method described in the foregoing 201 to 202, until the second packet is transmitted to a destination address of the second packet.

In conclusion, in this embodiment of this application, a network quality condition indicating a network quality requirement is carried in a to-be-transmitted packet, so that a subsequent each-hop communication device can select, based on the network quality condition carried in the packet, an appropriate physical interface to send the packet, so that the network quality requirement indicated by the network quality condition of the packet can be met in a transmission process. Therefore, cases such as a large delay and a high packet loss rate are reduced in a process of transmitting a first packet.

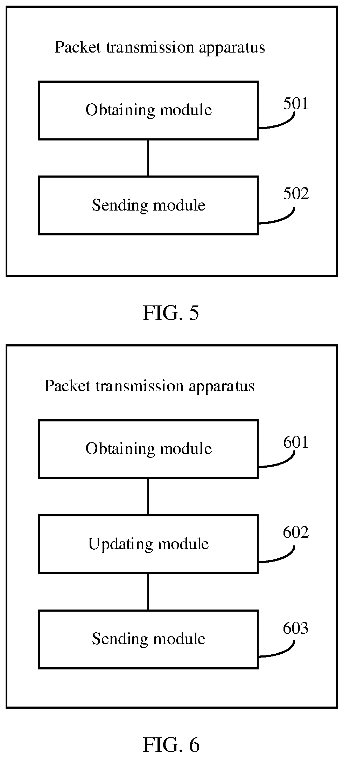

The foregoing describes the packet transmission method in embodiments of this application. Corresponding to the foregoing method, an embodiment of this application further provides a packet transmission apparatus. The apparatus is configured to perform the packet transmission method in FIG. 2 by using modules shown in FIG. 5. As shown in FIG. 5, the packet transmission apparatus provided in this embodiment of this application includes the following modules.

An obtaining module 501 is configured to obtain, for the first communication device, a first packet. For steps performed by the obtaining module 501, refer to the description in the foregoing 201.

A sending module 502 is configured to select, for the first communication device based on a network quality condition corresponding to the first packet, a first physical interface from at least two physical interfaces corresponding to a logical interface to send the first packet, where a network quality parameter of the first physical interface corresponds to the network quality condition. For steps performed by the sending module 502, refer to the description in the foregoing 202.

In a possible implementation, the network quality condition includes a network slice identifier, an application program identifier, or a service level agreement SLA identifier.

In a possible implementation, the first packet includes the network quality condition, a network quality identifier is set for the first physical interface, and the network quality identifier corresponds to the network quality parameter.

In a possible implementation, the apparatus further includes: a first determining module, configured to determine, for the first communication device based on characteristic information corresponding to the first packet, the network quality condition corresponding to the first packet.

In a possible implementation, the obtaining module 501 is further configured to obtain, for the first communication device, network quality parameters of physical interfaces corresponding to the logical interface; and the apparatus further includes: a selection module, configured to select, for the first communication device from the network quality parameters of the physical interfaces, a network quality parameter meeting a target condition as a network quality parameter of the logical interface; and the sending module 502, further configured to advertise the network quality parameter of the logical interface.

In a possible implementation, the network quality parameter includes a transmission delay, and the selection module is configured to select, for the first communication device, a smallest transmission delay from transmission delays of the physical interfaces as a transmission delay of the logical interface, where the smallest transmission delay is a transmission delay of the first physical interface or a transmission delay of a second physical interface included in the logical interface.

In a possible implementation, the network quality parameter includes a bandwidth, and the selection module is configured to select, for the first communication device, a largest bandwidth from bandwidths of the physical interfaces as a bandwidth of the logical interface, where the largest bandwidth is a bandwidth of the first physical interface or a bandwidth of a second physical interface included in the logical interface.

In a possible implementation, the sending module 502 is configured to select, for the first communication device, a largest bandwidth from bandwidths of the physical interfaces as a bandwidth of the logical interface, where the largest bandwidth is a bandwidth of the first physical interface or a bandwidth of a second physical interface included in the logical interface.

In a possible implementation, the sending module 502 is configured to advertise, for the first communication device, the network quality parameter of the logical interface according to an open shortest path first OSPF protocol, where the network quality parameter of the logical interface is carried in an extended TLV subfield.

In a possible implementation, the obtaining module 501 is further configured to obtain, for the first communication device, a second packet, where the second packet does not include the network quality condition; and the sending module 502 is configured to select, for the first communication device, a third physical interface from the at least two physical interfaces corresponding to the logical interface to send the second packet, where a network quality parameter of the third physical interface does not correspond to the network quality condition.

In a possible implementation, the apparatus further includes: a second determining module, configured to determine, for the first communication device, the logical interface based on a destination address of the first packet.

In a possible implementation, the logical interface includes a trunk Trunk interface.

As shown in FIG. 6, an embodiment of this application further provides a packet transmission apparatus. The apparatus is configured to perform the packet transmission method in FIG. 4 by using modules shown in FIG. 6. The apparatus includes the following several modules.

An obtaining module 601 is configured to obtain, for the first communication device, a network quality parameter of a logical interface of a second communication device; and obtain, for the first communication device, a first packet, and determine a network quality condition based on matching between the network quality parameter and a network quality requirement of the first packet. For steps performed by the obtaining module 601, refer to the description in the foregoing 401.

An updating module 602 is configured to update, for the first communication device, the first packet to obtain a second packet, where the second packet includes the network quality condition. For steps performed by the updating module 602, refer to the description in the foregoing 402.

A sending module 603 is configured to send, for the first communication device, the second packet to the second communication device. For steps performed by the sending module 603, refer to the description in the foregoing 403.

In a possible implementation, the obtaining module 601 is configured to obtain, for the first communication device, the configured network quality parameter of the logical interface; or receive, for the first communication device, the network quality parameter of the logical interface sent by the second communication device.

In a possible implementation, the network quality condition includes a network slice identifier, an application program identifier, or a service level agreement SLA identifier.

It should be understood that when the packet transmission apparatuses provided in FIG. 5 and FIG. 6 implement functions of the apparatuses, division into the foregoing functional modules is merely used as an example for description. In actual application, the foregoing functions may be allocated to different functional modules for implementation according to a requirement, in other words, an internal structure of a device is divided into different functional modules, to implement all or some of the functions described above. In addition, the apparatuses provided in the foregoing embodiments and the method embodiments pertain to a same concept. For a specific implementation process of the apparatuses, refer to the method embodiments. Details are not described herein again.

An embodiment of this application provides a communication device. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform any example of the packet transmission method provided in embodiments of this application.

An embodiment of this application provides a communication device. The device includes a communication interface and a processor. Optionally, the communication device further includes a memory. The communication interface, the memory, and the processor communicate with each other through an internal connection channel. The memory is configured to store instructions. The processor is configured to execute the instructions stored in the memory, to control the communication interface to receive a signal, and control the communication interface to send a signal. In addition, when the processor executes the instructions stored in the memory, the processor is enabled to perform any example of the packet transmission method provided in embodiments of this application.

Corresponding to the method embodiments and virtual apparatus embodiments provided in this application, an embodiment of this application further provides a communication device. The following describes a hardware structure of the communication device.

A communication device 700 or a communication device 800 described below corresponds to the communication device in the foregoing method embodiments. Hardware, modules, and the foregoing other operations and/or functions in the communication device 700 or the communication device 800 are respectively used to implement steps and methods implemented by the communication device 700 or the communication device 800 in the method embodiments. For specific details about how the communication device 700 or the communication device 800 performs packet transmission, refer to the foregoing method embodiments. For brevity, details are not described herein again. The steps 201 to 202 and the steps 401 to 403 in the foregoing methods are completed by using an integrated logic circuit of hardware or instructions in a form of software in a processor of the communication device 700 or the communication device 800. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware in the processor. To avoid repetition, details are not described herein again.

The communication device 700 or the communication device 800 corresponds to the packet transmission apparatus shown in FIG. 5 or FIG. 6 in the foregoing virtual apparatus embodiments, and each functional module in the packet transmission apparatus is implemented by using software of the communication device 700 or the communication device 800. In other words, the functional modules included in the packet transmission apparatus are generated after the processor of the communication device 700 or the communication device 800 reads program code stored in the memory.

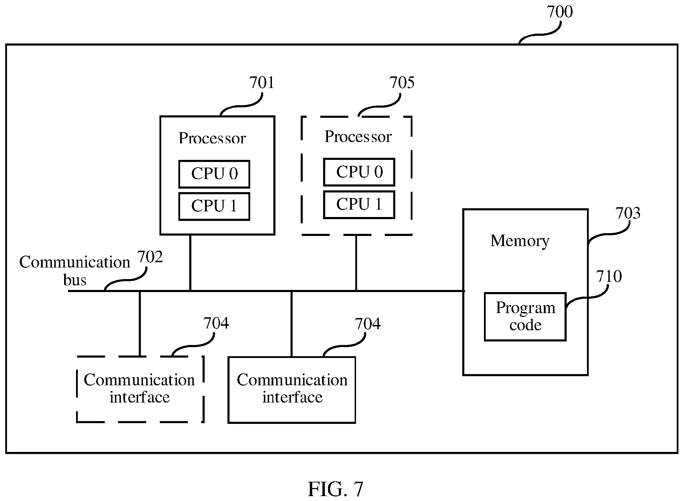

FIG. 7 is a schematic diagram of a structure of a communication device 700 according to an example embodiment of this application. The communication device 700 shown in FIG. 7 is configured to perform operations in the packet transmission method shown in FIG. 2 or FIG. 4. The communication device 700 may be, for example, a switch, a router, or a controller. The communication device 700 may be implemented by using a general bus architecture.

As shown in FIG. 7, the communication device 700 includes at least one processor 701, a memory 703, and at least one communication interface 704.

The processor 701 is, for example, a general-purpose central processing unit (central processing unit, CPU), a digital signal processor (digital signal processor, DSP), a network processor (network processor, NP), a graphics processing unit (Graphics Processing Unit, GPU), a neural-network processing unit (neural-network processing unit, NPU), a data processing unit (Data Processing Unit, DPU), a microprocessor, or one or more integrated circuits configured to implement the solutions of this application. For example, the processor 701 includes an application-specific integrated circuit (application-specific integrated circuit, ASIC), a programmable logic device (programmable logic device, PLD) or another programmable logic device, a transistor logic device, a hardware component, or any combination thereof. The PLD is, for example, a complex programmable logic device (complex programmable logic device, CPLD), a field-programmable gate array (field-programmable gate array, FPGA), generic array logic (generic array logic, GAL), or any combination thereof. The processor 701 may implement or execute various logical blocks, modules, and circuits described with reference to content disclosed in embodiments of the present invention. Alternatively, the processor may be a combination of processors implementing a computing function, for example, a combination of one or more microprocessors, or a combination of a DSP and a microprocessor.

Optionally, the communication device 700 further includes a bus. The bus is configured to transmit information between components of the communication device 700. The bus may be a peripheral component interconnect (peripheral component interconnect, PCI for short) bus, an extended industry standard architecture (extended industry standard architecture, EISA for short) bus, or the like. The bus may be classified into an address bus, a data bus, a control bus, and the like. For ease of indication, the bus is indicated by using only one bold line in FIG. 7. However, it does not indicate that there is only one bus or only one type of bus.

The memory 703 is, for example, a read-only memory (read-only memory, ROM) or another type of static storage device that can store static information and instructions, or a random access memory (random access memory, RAM) or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be used to carry or store expected program code in a form of instructions or a data structure and that can be accessed by a computer, but is not limited thereto. For example, the memory 703 exists independently, and is connected to the processor 701 through the bus. Alternatively, the memory 703 may be integrated with the processor 701.

The communication interface 704 is configured to communicate with another device or a communication network by using any transceiver-type apparatus. The communication network may be an Ethernet, a radio access network (RAN), a wireless local area network (wireless local area network, WLAN), or the like. The communication interface 704 may include a wired communication interface, and may further include a wireless communication interface. Specifically, the communication interface 704 may be an Ethernet (Ethernet) interface, a fast Ethernet (Fast Ethernet, FE) interface, a gigabit Ethernet (Gigabit Ethernet, GE) interface, an asynchronous transfer mode (Asynchronous Transfer Mode, ATM) interface, a wireless local area network (wireless local area network, WLAN) interface, a cellular network communication interface, or a combination thereof. The Ethernet interface may be an optical interface, an electrical interface, or a combination thereof. In this embodiment of this application, the communication interface 704 may be used by the communication device 700 to communicate with another device.

In a specific implementation, in an embodiment, the processor 701 may include one or more CPUs, such as a CPU 0 and a CPU 1 shown in FIG. 7. Each of the processors may be a single-core processor (single-CPU) or a multi-core processor (multi-CPU). The processor herein may be one or more devices, circuits, and/or processing cores configured to process data (for example, computer program instructions).

In a specific implementation, in an embodiment, the communication device 700 may include a plurality of processors such as the processor 701 and a processor 705 shown in FIG. 7. Each of the processors may be a single-core processor (single-CPU) or a multi-core processor (multi-CPU). The processor herein may be one or more devices, circuits, and/or processing cores configured to process data (for example, computer program instructions).

In a specific implementation, in an embodiment, the communication device 700 may further include an output device and an input device. The output device communicates with the processor 701, and may display information in a plurality of manners. For example, the output device may be a liquid crystal display (liquid crystal display, LCD), a light emitting diode (light emitting diode, LED) display device, a cathode ray tube (cathode ray tube, CRT) display device, a projector (projector), or the like. The input device communicates with the processor 701, and may receive an input from a user in multiple manners. For example, the input device may be a mouse, a keyboard, a touchscreen device, a sensing device, or the like.

In some embodiments, the memory 703 is configured to store program code 710 for performing the solutions of this application, and the processor 701 may execute the program code 710 stored in the memory 703. In other words, the communication device 700 may implement, by using the processor 701 and the program code 710 in the memory 703, the packet transmission method provided in the method embodiments. The program code 710 may include one or more software modules. Optionally, the processor 701 may also store program code or instructions for performing the solutions of this application.

In a specific embodiment, the communication device 700 in this embodiment of this application may correspond to the communication device in the foregoing method embodiment. The processor 701 in the communication device 700 reads the instructions in the memory 703, so that the communication device 700 shown in FIG. 7 can perform all or some operations performed by the communication device in the method embodiment.

The communication device 700 may further correspond to the apparatus shown in FIG. 5. Each functional module in the apparatus shown in FIG. 5 is implemented by using software of the communication device 700. In other words, the functional modules included in the apparatus shown in FIG. 5 are generated after the processor 701 of the communication device 700 reads the program code 710 stored in the memory 703.

The communication device 700 may further correspond to the apparatus shown in FIG. 6. Each functional module in the apparatus shown in FIG. 6 is implemented by using software of the communication device 700. In other words, the functional modules included in the apparatus shown in FIG. 6 are generated after the processor 701 of the communication device 700 reads the program code 710 stored in the memory 703.

The steps of the packet transmission methods shown in FIG. 2 and FIG. 4 are completed by using an integrated logic circuit of hardware or instructions in a form of software in a processor of the communication device 700. The steps of the method disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in a memory, and the processor reads information in the memory and completes the steps in the foregoing methods in combination with the hardware in the processor. To avoid repetition, details are not described herein again.

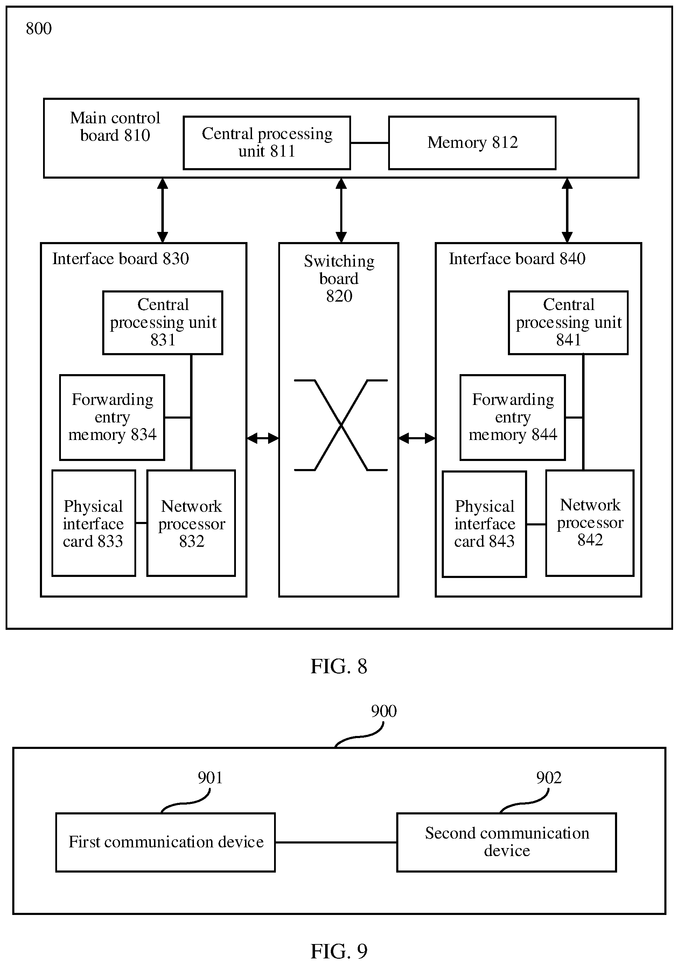

FIG. 8 is a schematic diagram of a structure of a communication device 800 according to an example embodiment of this application. The communication device 800 includes a main control board 810 and an interface board 830.

The main control board 810 is also referred to as a main processing unit (main processing unit, MPU) or a route processor card (route processor card). The main control board 810 is configured to control and manage components in the communication device 800, including functions such as routing calculation, device management, device maintenance, and protocol processing. The main control board 810 includes a central processing unit 811 and a memory 812.

The interface board 830 is also referred to as a line processing unit (line processing unit, LPU), a line card (line card), or a service board. The interface board 830 is configured to provide various service interfaces, and forward a data packet. The service interface includes, but is not limited to, an Ethernet interface, a POS (Packet over SONET/SDH) interface, and the like. The Ethernet interface is, for example, a flexible Ethernet service interface (Flexible Ethernet Clients, FlexE Clients). The interface board 830 includes a central processing unit 831, a network processor 832, a forwarding entry memory 834, and a physical interface card (physical interface card, PIC) 833.

The central processing unit 831 on the interface board 830 is configured to control and manage the interface board 830, and communicate with the central processing unit 811 on the main control board 810.

The network processor 832 is configured to forward a packet. A form of the network processor 832 may be a forwarding chip. Specifically, the network processor 832 is configured to forward a received packet based on a forwarding table stored in the forwarding entry memory 834. If a destination address of the packet is an address of the communication device 800, the network processor 832 sends the packet to a CPU (for example, the central processing unit 811) for processing. If the destination address of the packet is not the address of the communication device 800, the network processor 832 searches for, based on the destination address, a next hop and an outbound interface corresponding to the destination address in the forwarding table, and forwards the packet to the outbound interface corresponding to the destination address. Processing on an uplink packet includes processing on a packet inbound interface and forwarding table lookup. Processing on a downlink packet includes forwarding table lookup and the like.

The physical interface card 833 is configured to implement a physical layer interconnection function. Original traffic enters the interface board 830 from the physical interface card 833, and a processed packet is sent out from the physical interface card 833. The physical interface card 833, also referred to as a subcard, may be mounted on the interface board 830, and is responsible for converting an optical/electrical signal into a packet, performing validity check on the packet, and forwarding the packet to the network processor 832 for processing. In some embodiments, the central processing unit may also perform a function of the network processor 832, for example, implement software forwarding based on a general-purpose CPU. Therefore, the network processor 832 is not required in the physical interface card 833.

Optionally, the communication device 800 includes a plurality of interface boards. For example, the communication device 800 further includes an interface board 840, and the interface board 840 includes a central processing unit 841, a network processor 842, a forwarding entry memory 844, and a physical interface card 843.

Optionally, the communication device 800 further includes a switching board 820. The switching board 810 may also be referred to as a switch fabric unit (switch fabric unit, SFU). When the communication device has a plurality of interface boards 830, the switching board 810 is configured to complete data exchange between the interface boards. For example, the interface board 830 and the interface board 840 may communicate with each other via the switching board 810.

The main control board 810 is coupled to the interface board 830. For example, the main control board 810, the interface board 830, the interface board 840, and the switching board 810 are connected to a system backplane through a system bus to implement interworking. In a possible implementation, an inter-process communication (inter-process communication, IPC) channel is established between the main control board 810 and the interface board 830, and the main control board 810 communicates with the interface board 830 through the IPC channel.

Logically, the communication device 800 includes a control plane and a forwarding plane. The control plane includes the main control board 810 and the central processing unit 831. The forwarding plane includes components that perform forwarding, such as the forwarding entry memory 834, the physical interface card 833, and the network processor 832. The control plane performs functions such as routing, generating a forwarding table, processing signaling and a protocol packet, and configuring and maintaining a device status. The control plane delivers the generated forwarding table to the forwarding plane. At the forwarding plane, by performing table lookup based on the forwarding table delivered by the control plane, the network processor 832 forwards a packet received by the physical interface card 833. The forwarding table delivered by the control plane may be stored in the forwarding entry memory 834. In some embodiments, the control plane and the forwarding plane may be entirely separated, and are not on a same device.

If the communication device 800 is configured as a communication device configured to perform the packet transmission method shown in FIG. 2, after a packet is generated, the physical interface card 833 sends the packet through a first physical interface.

If the communication device 800 is configured as a communication device configured to perform the packet transmission method shown in FIG. 4, after a packet is generated, the physical interface card 833 sends the packet to a communication device configured to perform the packet transmission method shown in FIG. 2.

Operations performed on the interface board 840 are consistent with the operations performed on the interface board 830 in this embodiment of this application. For brevity, details are not described. The communication device 800 in this embodiment may correspond to the communication device in the foregoing method embodiments. The main control board 810, the interface board 830, and/or the interface board 840 in the communication device 800 may implement functions of the communication device and/or various steps implemented by the communication device in the foregoing method embodiments. For brevity, details are not described herein again.

It is to be noted that, there may be one or more main control boards. When there are a plurality of main control boards, the main control boards may include an active main control board and a standby main control board. There may be one or more interface boards. A stronger data processing capability of the communication device indicates a larger quantity of provided interface boards. There may also be one or more physical interface cards on the interface board. There may be no switching board or one or more switching boards. When there are a plurality of switching boards, load balancing and redundancy backup may be implemented together. In a centralized forwarding architecture, the communication device may not need a switching board, and the interface board undertakes a service data processing function of an entire system. In a distributed forwarding architecture, the communication device may have at least one switching board, and data is exchanged between a plurality of interface boards by using the switching board, to provide a capability of exchanging and processing a large capacity of data. Therefore, a data access and processing capability of the communication device in the distributed architecture is greater than the device in the centralized architecture. Optionally, a form of the communication device may alternatively be in a form in which there is only one card. To be specific, there is no switching board, and functions of the interface board and the main control board are integrated on the card. In this case, the central processing unit on the interface board and the central processing unit on the main control board may be combined into one central processing unit on the card, to perform functions obtained after the two central processing units are combined. The device in this form (for example, a communication device such as a low-end switch or a router) has a low data exchange and processing capability. A specific architecture that is to be used depends on a specific networking deployment scenario. This is not limited herein.

**In some possible embodiments, the foregoing communication device may be implemented as a virtualized device.**

For example, the virtualized device may be a virtual machine (English: Virtual Machine, VM) on which a program having a packet sending function is run, and the virtual machine is deployed on a hardware device (for example, a physical server). The virtual machine is a complete software-simulated computer system that has complete hardware system functions and that runs in an entirely isolated environment. The virtual machine may be configured as a first communication device or a second communication device. For example, the communication device may be implemented based on a general-purpose physical server by using a network functions virtualization (Network Functions Virtualization, NFV) technology. The communication device is a virtual host, a virtual router, or a virtual switch. After reading this application, a person skilled in the art may virtualize, on the general-purpose physical server by using the NFV technology, the communication device having the foregoing functions. Details are not described herein again.

For example, the virtualized device may be a container, and the container is an entity configured to provide an isolated virtualized environment. For example, the container may be a docker container. The container may be configured as a communication device. For example, a communication device may be created by using a corresponding image. For example, two container instances may be created for a proxy-container by using an image of the proxy-container (a container that provides a proxy service), which are a container instance proxy-container 1 and a container instance proxy-container 2 respectively. The container instance proxy-container 1 is provided as the communication device configured to perform the packet transmission method shown in FIG. 2, and the container instance proxy-container 2 is provided as the communication device configured to perform the packet transmission method shown in FIG. 4. When the container technology is used for implementation, the communication device may run by using a kernel of a physical machine, and a plurality of communication devices may share an operating system of the physical machine. Different communication devices can be isolated by using the container technology. A containerized communication device may run in a virtualized environment, for example, may run in a virtual machine, or the containerized communication device may directly run in the physical machine.

For example, the virtualized device may be a pod. The pod is a basic unit of Kubernetes (where Kubernetes is an open-source container orchestration engine of Google, and is briefly referred to as K8s in English) for deploying, managing, and orchestrating a containerized application. The pod may include one or more containers. All containers in a same pod are usually deployed on a same host. Therefore, all the containers in the same pod may communicate with each other via the host, and may share storage resources and network resources of the host. The pod may be configured as a communication device. For example, specifically, a container as a service (English full name: container as a service, CaaS for short, which is a container-based PaaS) may be indicated to create the pod, and the pod is provided as the communication device.

Certainly, the communication device may alternatively be another virtualized device. This is not enumerated herein one by one.

**In some possible embodiments, the foregoing communication device may alternatively be implemented by a general-purpose processor.**

For example, the general-purpose processor may be in a form of a chip. Specifically, the general-purpose processor implementing the communication device includes a processing circuit, and an input interface and an output interface that are internally connected to and in communication with the processing circuit. The processing circuit is configured to perform the packet generation step in the foregoing method embodiments through the input interface. The processing circuit is configured to perform the receiving step in the foregoing method embodiments through the input interface. The processing circuit is configured to perform the sending step in the foregoing method embodiments through the output interface. Optionally, the general-purpose processor may further include a storage medium. The processing circuit is configured to perform a storing step in the foregoing method embodiments via the storage medium. The storage medium may store instructions to be executed by the processing circuit. The processing circuit is configured to execute the instructions stored in the storage medium, to perform the foregoing method embodiments.

It should be understood that the processor may be a central processing unit (Central Processing Unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, any conventional processor, or the like. It is to be noted that the processor may be a processor that supports an advanced reduced instruction set computing machines (advanced RISC machines, ARM) architecture.

Further, in an optional embodiment, the memory may include a read-only memory and a random access memory, and provide instructions and data for the processor. The memory may further include a non-volatile random access memory. For example, the memory may further store information of a device type.

The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, many forms of RAMs may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

Refer to FIG. 9. An embodiment of this application provides a communication system 900. The communication system 900 includes at least one of a first communication device 901 and a second communication device 902. Optionally, the first communication device 901 is a packet transmission device in any one of the foregoing possible implementations, and the second communication device 902 is a packet transmission device in any one of the foregoing possible implementations.

An embodiment of this application provides a computer program (product). The computer program (product) includes computer program code. When the computer program code is run by a computer, the computer is enabled to perform the packet transmission method shown in the foregoing 201 to 202 and FIG. 2, or the packet transmission method shown in the foregoing 401 to 403 and FIG. 4.

An embodiment of this application provides a computer-readable storage medium. The computer-readable storage medium stores programs or instructions. When the programs or the instructions are run on a computer, the packet transmission method shown in the foregoing 201 to 202 and FIG. 2 is performed, or the packet transmission method shown in the foregoing 401 to 403 and FIG. 4 is performed.

An embodiment of this application provides a chip, including a processor, configured to invoke, from a memory, and run instructions stored in the memory, so that a communication device in which the chip is installed performs the packet transmission method shown in the foregoing 201 to 202 and FIG. 2, or the packet transmission method shown in the foregoing 401 to 403 and FIG. 4.

An embodiment of this application provides another chip, including an input interface, an output interface, a processor, and a memory. The input interface, the output interface, the processor, and the memory are connected through an internal connection channel. The processor is configured to execute code in the memory, and when the code is executed, the processor is configured to perform the packet transmission method shown in the foregoing 201 to 202 and FIG. 2, or the packet transmission method shown in the foregoing 401 to 403 and FIG. 4.

All or some of the foregoing embodiments may be implemented by software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, the procedures or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device integrating one or more usable media, for example, a server or a data center. The usable medium may be a magnetic medium (for example, a floppy disk, a hard disk, or a magnetic tape), an optical medium (for example, a DVD), a semiconductor medium (for example, a Solid-State Disk), or the like.

In a context of embodiments of this application, the computer program code or related data may be included by any appropriate carrier, so that a device, an apparatus, or a processor can perform various processing and operations described above. Examples of the carrier include a signal, a computer-readable medium, and the like.

Examples of the signal may include propagating signals in electrical, optical, radio, sound, or other forms, such as a carrier and an infrared signal.

The computer-readable medium may be any tangible medium that includes or stores a program used for or related to an instruction execution system, apparatus, or device. The machine-readable medium may be a machine-readable signal medium or a machine-readable storage medium. The machine-readable medium may include but is not limited to an electronic, magnetic, optical, electromagnetic, infrared, or semiconductor system, apparatus, or device, or any suitable combination thereof. More detailed examples of the machine-readable storage medium include an electrical connection with one or more wires, a portable computer disk, a hard disk, a random access memory (RAM), a read-only memory (ROM), an erasable programmable read-only memory (EPROM or flash memory), an optical storage device, a magnetic storage device, or any suitable combination thereof.

It may be clearly understood by a person skilled in the art that, for the purpose of convenient and brief description, for a detailed working process of the foregoing system, device, and module, refer to a corresponding process in the foregoing method embodiments. Details are not described herein again.

In the several embodiments provided in this application, it should be understood that the disclosed system, device, and method may be implemented in other manners. For example, the described device embodiment is merely an example. For example, division into the modules is merely logical function division and may be other division during actual implementation. For example, a plurality of modules or components may be combined or integrated into another system, or some features may be ignored or not performed. In addition, the displayed or discussed mutual couplings or direct couplings or communication connections may be implemented through some interfaces. Indirect couplings or communication connections between the devices or modules may be electrical connections, mechanical connections, or connections in other forms.

The modules described as separate parts may or may not be physically separate, and parts displayed as modules may or may not be physical modules, may be located in one position, or may be distributed on a plurality of network modules. Some or all of the modules may be selected based on actual requirements to achieve the objectives of the solutions in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated module may be stored in a computer-readable storage medium. Based on such an understanding, the technical solutions of this application essentially, or the part contributing to the conventional technology, or all or some of the technical solutions may be implemented in a form of a software product. The computer software product is stored in a storage medium and includes several instructions for indicating a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (read-only memory, ROM), a random access memory (random access memory, RAM), a magnetic disk, or an optical disc.

In this application, the terms "first", "second", and the like are used to distinguish between same or similar items whose effects and functions are basically the same. It should be understood that there is no logical or time-sequence dependency between "first", "second", and "n^{th}", and a quantity and an execution sequence are not limited. It should also be understood that although terms such as "first" and "second" are used in the following descriptions to describe various elements, these elements should not be limited by the terms. These terms are merely used to distinguish one element from another element. For example, without departing from the scope of the various examples, a first image may be referred to as a second image, and similarly, a second image may be referred to as a first image. Both the first image and the second image may be images, and in some cases, may be separate and different images.

It should be further understood that sequence numbers of processes do not mean execution sequences in embodiments of this application. The execution sequences of the processes should be determined based on functions and internal logic of the processes, and should not be construed as any limitation on the implementation processes of embodiments of this application.

In this application, the term "at least one" means one or more, and the term "a plurality of means two or more. For example, a plurality of second packets mean two or more second packets. The terms "system" and "network" may be used interchangeably in this specification.

It should be understood that the terms used in the descriptions of various examples in this specification are merely intended to describe specific examples, but are not intended to constitute a limitation. The terms "one" ("a" and "an") and "the" of singular forms used in the descriptions of various examples and the appended claims are also intended to include plural forms, unless otherwise specified in the context clearly.

It should be further understood that the term "include" (also referred to as "includes", "including", "comprises", and/or "comprising") used in this specification specifies presence of the stated features, integers, steps, operations, elements, and/or components, with presence or addition of one or more other features, integers, steps, operations, elements, components, and/or their components not excluded.

It should be further understood that the term "if" may be interpreted as a meaning "when" ("when" or "upon"), "in response to determining", or "in response to detecting". Similarly, according to the context, the phrase "if it is determined that" or "if (a stated condition or event) is detected" may be interpreted as a meaning of "when it is determined that" or "in response to determining" or "when (the stated condition or event) is detected" or "in response to detecting (the stated condition or event)".

It should be understood that determining B based on A does not mean that B is determined based on only A, and B may alternatively be determined based on A and/or other information.

It should further be understood that "one embodiment", "an embodiment", or "a possible implementation" mentioned throughout this specification means that particular features, structures, or characteristics related to the embodiments or implementations are included in at least one embodiment of this application. Therefore, "in one embodiment", "in an embodiment", or "in a possible implementation" appearing throughout this specification does not necessarily mean a same embodiment. In addition, these particular features, structures, or characteristics may be combined in one or more embodiments by using any appropriate manner.

The foregoing descriptions are merely embodiments of this application, but are not intended to limit this application. Any modification, equivalent replacement, or improvement made without departing from the spirit and principle of this application shall fall within the protection scope of this application.

## Claims

1. A packet transmission method, comprising:
obtaining, by a first communication device, a first packet; and
selecting, by the first communication device based on a network quality condition corresponding to the first packet, a first physical interface from at least two physical interfaces corresponding to a logical interface to send the first packet, wherein a network quality parameter of the first physical interface corresponds to the network quality condition.

2. The method according to claim 1, wherein the network quality condition comprises a network slice identifier, an application program identifier, or a service level agreement SLA identifier.

3. The method according to claim 1 or 2, wherein the first packet comprises the network quality condition, a network quality identifier is set for the first physical interface, and the network quality identifier corresponds to the network quality parameter.

4. The method according to claim 1 or 2, wherein before the selecting, by the first communication device based on a network quality condition corresponding to the first packet, a first physical interface from at least two physical interfaces corresponding to a logical interface to send the first packet, the method further comprises:
determining, by the first communication device based on characteristic information corresponding to the first packet, the network quality condition corresponding to the first packet.

5. The method according to any one of claims 1 to 4, wherein before the obtaining, by a first communication device, a first packet, the method further comprises:
obtaining, by the first communication device, network quality parameters of physical interfaces corresponding to the logical interface; and
selecting, by the first communication device from the network quality parameters of the physical interfaces, a network quality parameter meeting a target condition as a network quality parameter of the logical interface, and advertising the network quality parameter of the logical interface.

6. The method according to claim 5, wherein the network quality parameter comprises a transmission delay, and the selecting, by the first communication device from the network quality parameters of the physical interfaces, a network quality parameter meeting a target condition as a network quality parameter of the logical interface comprises:
selecting, by the first communication device, a smallest transmission delay from transmission delays of the physical interfaces as a transmission delay of the logical interface, wherein the smallest transmission delay is a transmission delay of the first physical interface or a transmission delay of a second physical interface comprised in the logical interface.

7. The method according to claim 5, wherein the network quality parameter comprises a bandwidth, and the selecting, by the first communication device from the network quality parameters of the physical interfaces, a network quality parameter meeting a target condition as a network quality parameter of the logical interface comprises:
selecting, by the first communication device, a largest bandwidth from bandwidths of the physical interfaces as a bandwidth of the logical interface, wherein the largest bandwidth is a bandwidth of the first physical interface or a bandwidth of a second physical interface comprised in the logical interface.

8. The method according to any one of claims 5 to 7, wherein the advertising the network quality parameter of the logical interface comprises:
advertising, by the first communication device, the network quality parameter of the logical interface according to an intermediate system to intermediate system IS-IS protocol, wherein the network quality parameter of the logical interface is carried in an extended intermediate system reachability type-length-value TLV field with a type value of 22, or carried in an inter autonomous system reachability TLV field, or carried in a multi topology initial sequence number TLV field with a type value of 222.

9. The method according to any one of claims 5 to 7, wherein the advertising the network quality parameter of the logical interface comprises:
advertising, by the first communication device, the network quality parameter of the logical interface according to an open shortest path first OSPF protocol, wherein the network quality parameter of the logical interface is carried in an extended TLV subfield.

10. The method according to any one of claims 1 to 9, wherein the method further comprises:
obtaining, by the first communication device, a second packet, wherein the second packet does not comprise the network quality condition; and
selecting, by the first communication device, a third physical interface from the at least two physical interfaces corresponding to the logical interface to send the second packet, wherein a network quality parameter of the third physical interface does not correspond to the network quality condition.

11. The method according to any one of claims 1 to 10, wherein before the selecting, by the first communication device based on a network quality condition corresponding to the first packet, a first physical interface from at least two physical interfaces corresponding to a logical interface to send the first packet, the method further comprises:
determining, by the first communication device, the logical interface based on a destination address of the first packet.

12. The method according to any one of claims 1 to 11, wherein the logical interface comprises a trunk Trunk interface.

13. A packet transmission method, comprising:
obtaining, by a first communication device, a network quality parameter of a logical interface of a second communication device;
obtaining, by the first communication device, a first packet, and determining a network quality condition based on matching between the network quality parameter and a network quality requirement of the first packet;
updating, by the first communication device, the first packet to obtain a second packet, wherein the second packet comprises the network quality condition; and
sending, by the first communication device, the second packet to the second communication device.

14. The method according to claim 13, wherein the obtaining, by a first communication device, a network quality parameter of a logical interface of a second communication device comprises:
obtaining, by the first communication device, the configured network quality parameter of the logical interface;
or
receiving, by the first communication device, the network quality parameter of the logical interface sent by the second communication device.

15. The method according to claim 13 or 14, wherein the network quality condition comprises a network slice identifier, an application program identifier, or a service level agreement SLA identifier.

16. A packet transmission system, wherein the packet transmission system comprises a first communication device and a second communication device, the first communication device is configured to perform the packet transmission method according to any one of claims 1 to 12, and the second communication device is configured to perform the packet transmission method according to any one of claims 13 to 15.

17. A communication device, wherein the communication device comprises a processor and a communication interface, and the processor executes instructions, to enable the communication device to perform the packet transmission method according to any one of claims 1 to 15.

18. A computer-readable storage medium, wherein the computer-readable storage medium stores at least one program instruction or code, and when the program instruction or the code is executed, a computer is enabled to implement the packet transmission method according to any one of claims 1 to 15.
